# EUROPEAN PATENT APPLICATION

(11) **EP 4 268 937 A1**
(43) Date of publication of application: **01.11.2023**
(21) Application number: 22882525.3
(22) Date of filing: 16.09.2022
(51) Int. Cl.: B01D 53/26, H01M 50/24

(54) **MOISTURE ABSORPTION DEVICE, BATTERY, AND POWER DEVICE**

(30) Priority: 18.10.2021 CN 202122508116 U
(71) Applicant: Contemporary Amperex Technology Co., Limited, Ningde, Fujian 352100 (CN)
(72) Inventor: LIAO, Boxiang, Ningde, Fujian 352100 (CN); WANG, Peng, Ningde, Fujian 352100 (CN); GU, Yanlong, Ningde, Fujian 352100 (CN); HUANG, Jiawei, Ningde, Fujian 352100 (CN)
(74) Representative: Ziebig Hengelhaupt Intellectual Property Attorneys Patentanwaltskanzlei PartGmbB
(86) International application number: PCT/CN2022/119427
(87) International publication number: WO 2023/065914

(57) **Abstract**

The present application relates to a moisture-absorbing device, a battery and an electrical apparatus. The moisture-absorbing device includes a moisture-absorbing layer, and along the thickness direction of the moisture-absorbing layer, the moisture-absorbing layer includes an upper film, a moisture-absorbing core and a substrate stacked together; wherein the upper film is connected to the substrate to enclose the moisture-absorbing core therebetween. In the present application, the moisture-absorbing layer adopts an enclosed structure design, so that the moisture-absorbing core is capable of absorbing water vapor in the battery to form liquid water, and water in the moisture-absorbing core is prevented from seeping out from the periphery of the moisture-absorbing layer, thereby reducing the risk of back seepage of water in the moisture-absorbing device and improving the electrical insulation performance of the battery.

## Description

The present application claims priority to Chinese patent application 202122508116.4 filed on October 18, 2021 and entitled "MOISTURE-ABSORBING DEVICE, BATTERY AND ELECTRICAL APPARATUS", which is incorporated herein by reference in its entirety.

### Technical Field

The present application relates to the technical field of electrical apparatuses, and in particular to a moisture-absorbing device, a battery and an electrical apparatus.

### Background Art

Energy saving and emission reduction is the key to the sustainable development of automobile industry, and electric vehicles have become an important part of the sustainable development of automotive industry due to their advantages of energy saving and environmental protection. For electric vehicles, the battery is their main energy storage device. Due to the harsh use environment and insufficient sealing of the battery, water vapor will enter the battery, which will reduce the insulation performance of the battery, affect the operation of the battery, and reduce the life of the battery.

### Summary of the Invention

### Technical problem

In view of the above problems, the present application provides a moisture-absorbing device, a battery and an electrical apparatus, which can adjust and solve the problem of back seepage of water absorbed by the moisture-absorbing device of the battery, and improve the insulation performance of the battery.

### Technical solution

In a first aspect, the present application provides a moisture-absorbing device. The moisture-absorbing device includes a moisture-absorbing layer, and along the thickness direction of the moisture-absorbing layer, the moisture-absorbing layer includes an upper film, a moisture-absorbing core and a substrate stacked together; wherein, the upper film is connected to the substrate to enclose the moisture-absorbing core therebetween.

In some embodiments, the upper film is a waterproof and breathable film. When the upper film is a waterproof and breathable film, water vapor in the battery can enter the moisture-absorbing layer through the upper film to be absorbed by the moisture-absorbing core in the moisture-absorbing layer, and at the same time, the liquid water formed by the absorption of the moisture-absorbing core is not easy to seep out from the upper film, reducing the risk of water in the moisture-absorbing device seeping back into the battery.

In some embodiments, the substrate is an airtight sealing layer. When the substrate is an airtight sealing layer, the moisture in the moisture-absorbing layer will not seep out from the substrate, which improves the sealability of the moisture-absorbing layer and further reduces the risk of back seepage of the water in the moisture-absorbing device.

In some embodiments, the upper film and the substrate are connected by hot-melt welding. By adopting hot-melt welding connection at the hot-melt welding site between the upper film and the lower film, the connection strength at the hot-melt welding site can be increased, the sealability of the moisture-absorbing layer can be improved, and the risk of the water absorbed by the moisture-absorbing core of the moisture-absorbing layer seeping back into the battery can be reduced.

In some embodiments, the upper film is compounded with non-woven cloth. By compounding non-woven cloth on the upper film, the adhesive ability of the hot-melt film on the upper film can be improved, so that the strength of the hot-melt welding connection is increased when the melting point of the material of the upper film differs greatly from that of the material of the substrate, and the hot-melt welding site is not easy to crack, thereby increasing the selectivity of the substrate, and the operability of hot-melt welding.

In some embodiments, the moisture-absorbing core is made of one of a fiber material, a resin material and a powder material. When the moisture-absorbing core is made of one of fiber, resin materials or powder, the moisture-absorbing core can repeatedly absorb or release water vapor. In the wet season, water vapor enters the box body through a balance valve of the battery and can be absorbed by and stored in the moisture-absorbing core. In the dry season, the liquid water in the moisture-absorbing core can be released outside of the battery through the balance valve in the form of water vapor, restoring the moisture-absorbing property of the moisture-absorbing core. In this way, the moisture-absorbing device of such a structure can work well in the battery for a long time and improve the service life of the battery.

In some embodiments, the moisture-absorbing layer further includes an airtight and waterproof layer, and the airtight and waterproof layer is located between the upper film and the moisture-absorbing core. By adding the airtight and waterproof layer between the upper film and the moisture-absorbing core, liquid water can be further prevented from seeping out of the moisture-absorbing layer under pressure.

In some embodiments, the airtight and waterproof layer is a plastic sheet or closed-cell foam. When the airtight and waterproof layer is a plastic sheet or closed-cell foam, it can effectively prevent liquid water from seeping out and reduce production costs.

In some embodiments, the area of the substrate is S1, the area of the upper film is S2, the area of the airtight and waterproof layer is S3, and the area of the moisture-absorbing core is S4, wherein S1≥S2≥S3≥S4. When S1≥S2≥S3≥S4, the upper film and the substrate can better enclose the moisture-absorbing core in the moisture-absorbing layer and protect the moisture-absorbing core, while the airtight protective layer can further prevent the liquid water in the moisture-absorbing core from seeping out.

In some embodiments, the moisture-absorbing device further includes a thermal insulation buffer layer, and the thermal insulation buffer layer is connected to the upper film. By providing the thermal insulation buffer layer on one side of the upper film of the moisture-absorbing layer, the temperature difference between the inside and outside of the battery can be reduced, and the water vapor in the air can be prevented from condensing into condensed water, thereby avoiding the generation of condensed water in the battery, avoiding the risk of insulation failure of the battery, and at the same time improving the anti-extrusion performance of the battery, and preventing the battery cell and the moisture-absorbing device from being extruded and damaged. Moreover, the structural design of combining the thermal insulation buffer layer with the moisture-absorbing layer can improve the space utilization rate of the box body of the battery and effectively solve the problem of too many devices inside the box body of the battery.

In some embodiments, the thermal insulation buffer layer includes a first thermal insulation buffer layer, a gap exists between the moisture-absorbing layer and the first thermal insulation buffer layer along the circumferential direction of the moisture-absorbing layer, and water vapor can enter the moisture-absorbing layer through the gap. Such a structure can avoid the barrier effect of the thermal insulation buffer layer and the connecting elements between the thermal insulation buffer layer and the moisture-absorbing layer on water vapor, so that water vapor can be absorbed or released by the moisture-absorbing core inside the moisture-absorbing layer, improving the moisture-absorbing performance of the moisture-absorbing device.

In some embodiments, the thermal insulation buffer layer includes a second thermal insulation buffer layer provided with a groove, and at least part of the moisture-absorbing layer is located in the groove to enable water vapor to enter the moisture-absorbing layer through the thermal insulation buffer layer. This structure improves the moisture-absorbing performance of the moisture-absorbing device. Also, because the protruding part of the moisture-absorbing layer can be accommodated in the groove, the space occupied by the moisture-absorbing layer is reduced, which is conducive to the miniaturization of the moisture-absorbing device, and further improves the space utilization rate inside the battery. At the same time, the thermal insulation buffer layer can protect the moisture-absorbing layer and prevent the upper film from being extruded and damaged.

In some embodiments, the substrate is made of a rigid material or a flexible material. When the substrate is made of a flexible material, it has a smaller volume, is simple to prepare, and can be produced quickly and in large quantities on the production line. When the substrate is made of a rigid material, the connection strength between the upper film and the substrate is higher, and is not easy to damage, so that the installation of the moisture-absorbing layer and the thermal insulation buffer layer and the battery is also more secure.

In some embodiments, the substrate is made of a rigid material, and the thermal insulation buffer layer and the substrate are connected by connecting elements. Adopting the connection mode of bonding between the thermal insulation buffer layer and the moisture-absorbing layer can improve the connection strength between the moisture-absorbing layer and the thermal insulation buffer layer, thereby improving the structural stability of the moisture-absorbing device.

In some embodiments, the thermal insulation buffer layer is bonded to the moisture-absorbing layer. The connection mode of bonding between the thermal insulation buffer layer and the moisture-absorbing layer has the advantages of simple and convenient preparation process, low cost, etc., can reduce the manufacturing cost, and is convenient for mass production on the production line.

In some embodiments, the thermal insulation buffer layer is foam. When the thermal insulation buffer layer is foam, it can improve the thermal insulation performance and anti-extrusion performance of the battery, further reduce the risk of insulation failure of the battery, improve the internal space utilization rate of the box body of the battery, and save manufacturing costs.

In a second aspect, the present application provides a battery, including the moisture-absorbing device in the above embodiments.

In a third aspect, the present application provides an electrical apparatus, including the battery in the above embodiments, wherein the battery is used for providing electric energy for the electrical apparatus.

It should be understood that the above general description and the following detailed description are only exemplary and can not limit the present application.

### Beneficial effects

In the technical solution of the embodiments of the present application, by adopting an enclosed structure design for the moisture-absorbing layer, the moisture-absorbing core can absorb the water vapor in the battery to form liquid water, and it can prevent the water in the moisture-absorbing core from seeping out from the periphery of the moisture-absorbing layer, thereby reducing the risk of back seepage of the water in the moisture-absorbing device, and improving the electrical insulation performance of the battery.

### Description of Drawings

Fig. 1 is a schematic structural view of a vehicle according to some embodiments of the present application;
Fig. 2 is an exploded schematic structural diagram of a battery according to some embodiments of the present application;
Fig. 3 is a schematic structural diagram of a moisture-absorbing layer according to some embodiments of the present application in a specific implementation, wherein the upper film and the substrate are not hot-melt welded;
Fig. 4 is a partial enlarged view of A in Fig. 3;
Fig. 5 is a front view of the moisture-absorbing layer in Fig. 3, wherein the upper film and the substrate are hot-melt welded;
Fig. 6 is a schematic structural diagram of the moisture-absorbing device in Fig. 2 in a specific implementation;
Fig. 7 is the bottom view of Fig. 6;
Fig. 8 is an exploded view of a moisture-absorbing layer according to some embodiments of the present application in a specific implementation;
Fig. 9 is a front view of Fig. 8;
Fig. 10 is a side view of Fig. 8;
Fig. 11 is a schematic structural diagram of a thermal insulation buffer layer according to some embodiments of the present application;
Fig. 12 is a sectional view from another angle of Fig. 11;
Fig. 13 is a schematic structural diagram of the moisture-absorbing device in Fig. 2 in another specific implementation.

Reference numerals:

1000 - vehicle; 100 - battery; 10 - box body; 10a - first part; 10b - second part; 20 - battery cell; 30 - moisture-absorbing device; 200 - controller; 300 - motor; 1 - moisture-absorbing layer; 11 - upper film; 12 - airtight and waterproof layer; 13 - moisture-absorbing core; 14 - substrate; 2 - thermal insulation buffer layer; 21 - groove; 3 - gap; 4 - hot-melt welding site; X - thickness direction.

The accompanying drawings, which are incorporated in and constitute a part of the specification, illustrate embodiments consistent with the present application and together with the description serve to explain the principles of the present application.

### Detailed Description of Embodiments of the Invention

Embodiments of the technical solutions of the present application will be described in detail below in conjunction with the drawings. The following embodiments are only used for more clearly illustrating the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific examples and are not intended to limit the present application; the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of' is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two), and similarly, "a plurality of groups" refers to two or more (including two) groups, and "a plurality of sheets" refers to two or more (including two) sheets.

In the description of the embodiments of the present application, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "install," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

At present, from the development of the market situation, the battery, as the main energy storage device, is more and more widely used, not only in energy storage power systems such as hydropower, firepower, wind power and solar power stations, but also in electric vehicles such as electric bicycles, electric motorcycles and electric automobiles, as well as military equipment and aerospace fields. With the continuous expansion of the application fields of batteries, the performance requirements for them are also constantly improving.

The applicant noticed that due to the harsh use environment and insufficient sealing of the battery, water vapor will enter the battery and then condense into water, which will reduce the insulation performance of the battery, affect the operation of the battery, and reduce the service life of the battery. In order to alleviate the problem of water entering the battery, the applicant has found through research that a moisture-absorbing device can be provided in the battery, so that the water entering the battery can be absorbed by the moisture-absorbing device. For example, a foam mat can be arranged inside the battery. The foam mat includes a moisture-absorbing pad, which includes a cladding layer, a moisture-absorbing layer (fiber material), an absorbent layer (water absorbent resin) and a bottom film, the layers are combined together by thermal bonding, and finally the moisture-absorbing pad is installed on the foam mat through magic felt. However, the periphery of the moisture-absorbing pad is an open structure, and the water absorbed by the moisture-absorbing layer may seep out from the periphery, which still leads to insulation failure of the battery and poses a safety hazard.

Based on the above considerations, in order to adjust and solve the problem of back seepage of the water absorbed by the moisture-absorbing device of the battery, after in-depth research, the inventor has designed a moisture-absorbing device having a moisture-absorbing layer designed with an enclosed structure. Specifically, a moisture-absorbing core is wrapped between a waterproof and breathable film with air-permeability and an airtight substrate, which prevents the water absorbed by the moisture-absorbing core from seeping out from the periphery of the moisture-absorbing layer, reduces the risk of back seepage of the water in the moisture-absorbing device and improves the insulation performance of the battery.

The moisture-absorbing device disclosed in the embodiments of the present application can be used, but not limited to, in an electrical apparatus such as a vehicle, a ship, or an aircraft. The power source system of the electrical apparatus can be formed using the moisture-absorbing device, battery and the like disclosed in the present application, which is beneficial to improving the insulation performance of energy storage devices such as batteries and enhancing the working performance and service life of energy storage devices such as batteries.

The present application provides an electrical apparatus that uses a battery as a power source, and the electrical apparatus may be, but is not limited to, a mobile phone, a tablet, a laptop, an electric toy, an electric tool, a battery vehicle, an electric vehicle, a ship, a spacecraft, and so on. The electric toy may include fixed or mobile electric toys, such as game consoles, electric car toys, electric ship toys, electric airplane toys, and the like. The spacecraft may include airplanes, rockets, space shuttles, spaceships, and the like.

For the convenience of description, the following embodiments are illustrated with an example in which an electrical apparatus according to some embodiments of the present application is a vehicle 1000.

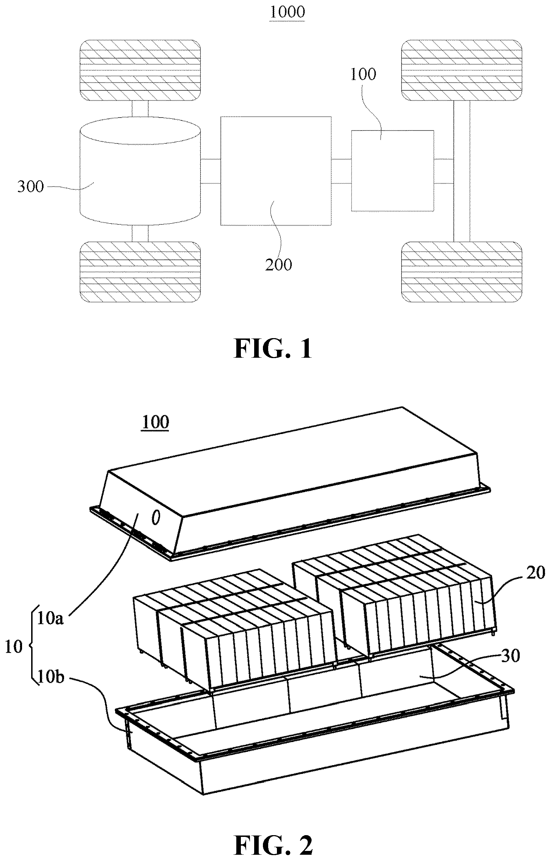

Reference is made to Fig. 1, which is a schematic structural diagram of a vehicle 1000 according to some embodiments of the present application. The vehicle 1000 may be a fuel vehicle, a gas vehicle, or a new-energy vehicle, and the new-energy vehicle may be an all-electric vehicle, a hybrid electric vehicle, an extended range electric vehicle, or the like. The interior of the vehicle 1000 is provided with a battery 100, and the battery 100 may be provided at the bottom or head or tail of the vehicle 1000. The battery 100 may be used for powering the vehicle 1000. For example, the battery 100 may be used as an operating power source of the vehicle 1000. The vehicle 1000 may further include a controller 200 and a motor 300. The controller 200 is used for controlling the battery 100 to power the motor 300, for example, for meeting the operating power demand of the vehicle 1000 for starting, navigating and driving.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Please refer to Fig. 2, which is an exploded view of a battery 100 according to some embodiments of the present application. The battery 100 includes a box body 10, a battery cell 20 and a moisture-absorbing device 30, the battery cell 20 is accommodated in the box body 10, and the moisture-absorbing device 30 is installed on the inner wall of the box body 10. Here, the box body 10 is used for providing an accommodating space for the battery cell 20, and the box body 10 can be of various structures. In some embodiments, the box body 10 may include a first part 10a and a second part 10b. The first part 10a and the second part 10b are covered by each other, and the first part 10a and the second part 10b together define an accommodating space for accommodating the battery cell 20. The second part 10b may be a hollow structure with one end open, the first part 10a may be a plate-like structure, and the first part 10a covers the opening side of the second part 10b, so that the first part 10a and the second part 10b together define the accommodating space. It is also possible that each of the first part 10a and the second part 10b is a hollow structure with one side open, and the opening side of the first part 10a covers the opening side of the second part 10b. Of course, the box body 10 formed by the first part 10a and the second part 10b can be of various shapes, such as a cylinder or a cuboid.

In the battery 100, there may be a plurality of battery cells 20, and the plurality of battery cells 20 can be connected in series, in parallel or in parallel-series, wherein the parallel-series connection means that the plurality of battery cells 20 are connected in both series and parallel. A plurality of battery cells 20 can be directly connected together in series, in parallel or in parallel-series, and then the whole composed of the plurality of battery cells 20 is accommodated in the box body 10; of course, the battery 100 can also be formed as follows: a plurality of battery cells 20 are firstly connected in series, in parallel or in parallel-series to form battery modules, and then a plurality of battery modules are connected in series, in parallel or in parallel-series to form a whole and accommodated in the box body 10.

Each battery cell 20 may be a secondary battery or a primary battery; or may be a lithium-sulfur battery, a sodium-ion battery or a magnesium-ion battery, but is not limited thereto. The battery cell 20 may be in the shape of a cylinder, a flat body, a cuboid or others.

The battery 100 further includes a moisture-absorbing device 30, and there may be one or more moisture-absorbing devices 30. The moisture-absorbing device 30 may be installed on the inner wall of the box body 10 to absorb water vapor in the battery 100, prevent liquid water from seeping back, and improve the insulation performance of the battery 100 to ensure the normal operation of the battery 100. Also, the moisture-absorbing device 30 has the functions of buffering and thermal insulation, which can effectively utilize the space of the box body 10, solve the problem of too many devices in the box body 10 of the battery 100, and improve the thermal insulation and the anti-extrusion performance of the battery module, thereby further avoiding the generation of condensed water in the battery 100 and preventing the insulation failure of the battery 100. The battery 100 may further include other structures, for example, the battery 100 may further include a convergence component for electrically connecting the plurality of battery cells 20.

The moisture-absorbing device 30 may be installed by adhesive bonding or connection using connecting elements such as locking and snap-fit, but it is not limited thereto.

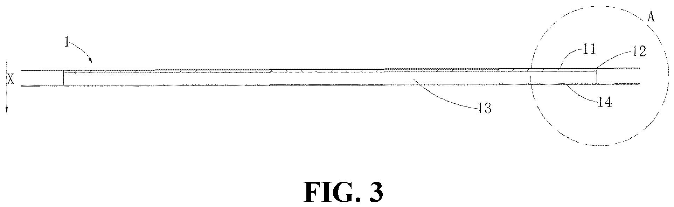

Reference is made to Figs. 3, 4 and 5. An embodiment of the present application provides a moisture-absorbing device 30, the moisture-absorbing device 30 includes a moisture-absorbing layer 1, and along the thickness direction X of the moisture-absorbing layer 1, the moisture-absorbing layer 1 includes an upper film 11, a moisture-absorbing core 13 and a substrate 14 stacked together; the upper film 11 is connected to the substrate 14 to enclose the moisture-absorbing core 13 therebetween.

In the embodiment, the moisture-absorbing device 30 is a device used for adjusting humidity in the battery 100 and can absorb water vapor in the battery 100 to ensure that the battery 100 has good electrical insulation performance. In order to ensure the electrical insulation of the battery 100 and the moisture-absorbing performance of the moisture-absorbing device 30, the moisture-absorbing device 30 of the present application adopts a multi-layer structure design, wherein the moisture-absorbing layer 1 adopts an enclosed structure design. Along the thickness direction X of the moisture-absorbing layer 1, the moisture-absorbing layer 1 includes an upper film 11, a moisture-absorbing core 13 and a substrate 14 stacked together. In this structure, the upper film 11 can allow water vapor to pass through and prevent liquid water from seeping out; the moisture-absorbing core 13 can absorb and store the water vapor entering the moisture-absorbing layer 1 through the upper film 11, or release the water vapor in the dry season to adjust the humidity in the battery 100; the substrate 14 is connected to the upper film 11 to make the moisture-absorbing layer 1 form an enclosed structure to enclose the moisture-absorbing core 13 in the moisture-absorbing layer 1 to prevent the liquid water in the moisture-absorbing core 13 from seeping out from the moisture-absorbing layer 1.

By adopting an enclosed structure design for the moisture-absorbing layer 1, the moisture-absorbing core 13 can absorb the water vapor in the battery 100 to form liquid water, and it can prevent the water in the moisture-absorbing core 13 from seeping out from the periphery of the moisture-absorbing layer 1, thereby reducing the risk of back seepage of the water in the moisture-absorbing device 30, and improving the electrical insulation performance of the battery 100.

Specifically, the upper film 11 is a waterproof and breathable film.

In the embodiment, the waterproof and breathable film has a uniform microporous structure. This microporous structure allows gaseous water to pass through easily, and at the same time makes it difficult for liquid water to pass through, so as to achieve the waterproof and breathable effect. The waterproof and breathable film can be made of high-molecular structural materials such as PTFE or PE, but is not limited thereto.

When the upper film 11 is a waterproof and breathable film, the water vapor in the battery 100 can enter the moisture-absorbing layer 1 through the upper film 11 to be absorbed by the moisture-absorbing core 13 in the moisture-absorbing layer 1, and at the same time, the liquid water formed by the absorption of the moisture-absorbing core 13 is not easy to seep out from the upper film 11, reducing the risk of water in the moisture-absorbing device 30 seeping back into the battery 100.

Specifically, the substrate 14 is an airtight sealing layer.

In the embodiment, the airtight sealing layer can prevent water vapor and liquid water from seeping out. The substrate 14 can be made of plastic materials such as PE, PP, PVC, but is not limited thereto.

When the substrate 14 is an airtight sealing layer, the water in the moisture-absorbing layer 1 will not seep out from the substrate 14, which improves the sealability of the moisture-absorbing layer 1 and further reduces the risk of back seepage of the water in the moisture-absorbing device 30.

In a specific embodiment, the upper film 11 and the substrate 14 are connected by hot-melt welding.

In the embodiment, hot-melt welding is a connection method that connects two objects into a whole through high temperature. The connection strength of the hot-melt welding connection is high, the welding point is molecular binding, which is not easy to age, and the connection point is not susceptible to erosion, providing good sealing effect. At the same time, this connection method is simple and convenient to operate, enabling quick and mass production on the production line. When the melting points of the material of the upper film 11 and the material of the substrate 14 are close, the upper film 11 and the substrate 14 can be hot-melt welded directly by high temperature without adding a hot-melt film; when the melting points of the material of the upper film 11 and the material of the substrate 14 differ greatly, hot-melt welding can be carried out by adding a hot-melt film.

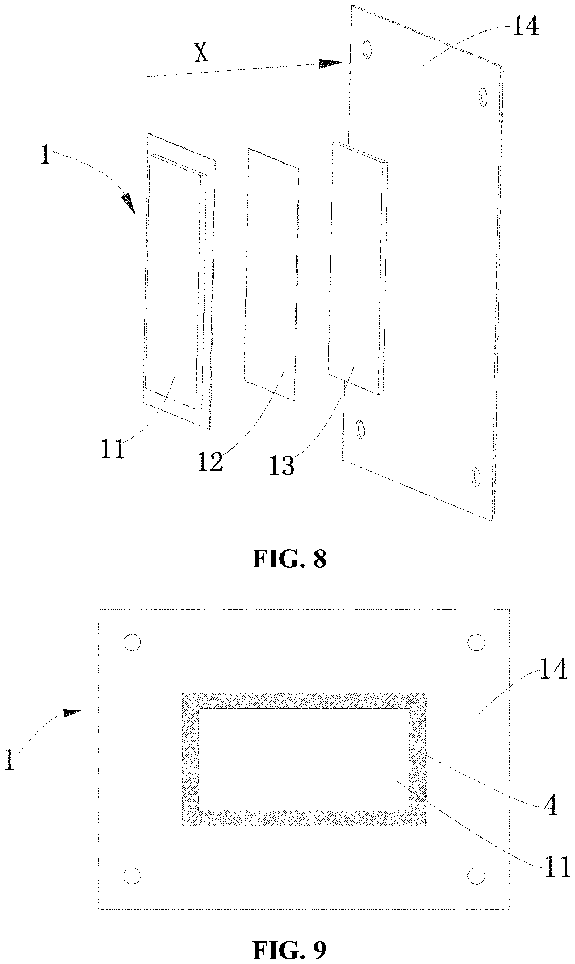

In the specific embodiment shown in Fig. 9, the melting point of the material of the upper film 11 is close to that of the material of the substrate 14, and the upper film 11 and the substrate 14 can be hot-melt welded at the hot-melt welding site 4 directly by high temperature without adding a hot-melt film, so the connection strength is higher and the sealing effect is better.

By adopting hot-melt welding connection at the hot-melt welding site 4 between the upper film 11 and the lower film 14, the connection strength of the hot-melt welding site 4 can be increased, the sealability of the moisture-absorbing layer 1 can be improved, and the risk of the water absorbed by the moisture-absorbing core 13 of the moisture-absorbing layer 1 seeping back into the battery 100 can be reduced.

In a specific embodiment, the upper film 11 is compounded with non-woven cloth.

In the embodiment, since the melting points of the materials of the upper film 11 and the substrate 14 are required to be close to each other if they are to be connected directly through high-temperature hot-melt welding, the scope of use of the substrate 14 is limited. When the melting points of the material of the upper film 11 and the material of the substrate 14 are quite different, it is necessary to add a hot-melt film between the upper film 11 and the substrate 14, and the upper film 11 and the substrate 14 are connected by hot welding through the hot-melt film. However, the adhesion of the hot-melt film directly added between the upper film 11 and the substrate 14 is not strong, so that the connection strength between the upper film 11 and the substrate 14 is reduced, and the hot-melt welding site 4 is easy to crack, resulting in poor sealing effect of the moisture-absorbing layer 1. With non-woven cloth compounded on the upper film 11, the adhesive ability of the hot-melt film on the upper film 11 can be improved to increase the connection strength between the upper film 11 and the substrate 14.

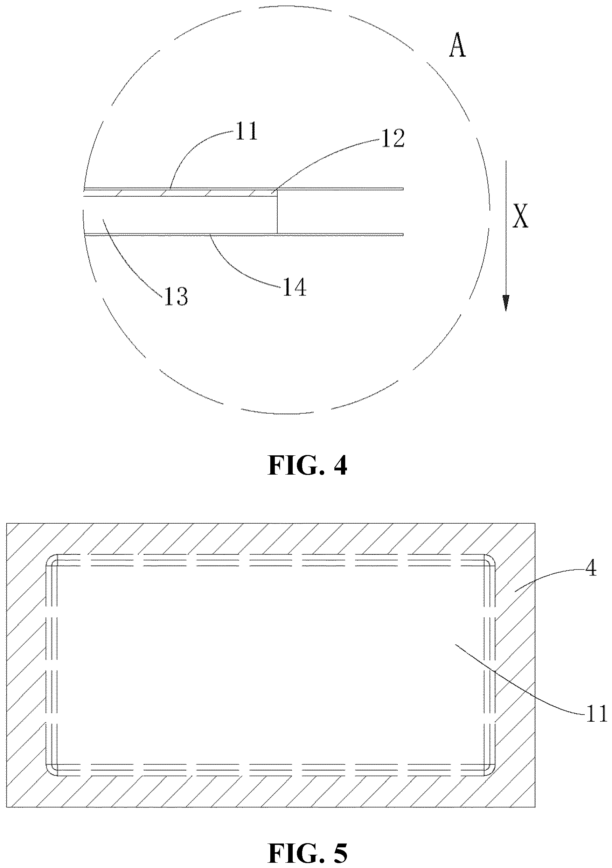

In the specific embodiment shown in Fig. 5, the melting point of the material of the substrate 14 differs greatly from that of the material of the upper film 11, with the hot-melt film added at the hot-melt welding site 4 between the upper film 11 compounded with non-woven cloth and the substrate 14, the upper film 11 and the substrate 14 can thus be connected by hot-melt welding.

By compounding non-woven cloth on the upper film 11, the adhesive ability of the hot-melt film on the upper film 11 can be improved, so that the strength of the hot-melt welding connection is increased when the melting point of the material of the upper film 11 differs greatly from that of the material of the substrate 14, and the hot-melt welding site 4 is not easy to crack, thereby increasing the selectivity of the substrate 14, and the operability of hot-melt welding.

In a specific embodiment, the moisture-absorbing core 13 is made of one of a fiber material, a resin material and a powder material.

In the embodiment, the moisture-absorbing materials of fiber, resin or powder type are all composite structures of various materials, have sufficient microporous structures and strong moisture-absorbing ability, can physically (without chemical reaction) lock moisture, and can absorb water vapor or release water vapor to achieve humidity regulation. Of course, the moisture-absorbing core 13 can also be made of other composite materials with good moisture-absorbing and moisture release properties, and is not limited thereto.

When the moisture-absorbing core 13 is made of one of fiber, resin material or powder, the moisture-absorbing core 13 can repeatedly absorb or release water vapor. In the wet season, water vapor enters the box body 10 through the balance valve of the battery 100 and can be absorbed by and stored in the moisture-absorbing core 13, while in the dry season, the liquid water in the moisture-absorbing core 13 can be released outside of the battery 100 through the balance valve in the form of water vapor, thereby restoring the moisture-absorbing property of the moisture-absorbing core 13. In this way, the moisture-absorbing device 30 of such a structure can work well in the battery 100 for a long time and improve the service life of the battery 100.

In a specific embodiment, the moisture-absorbing layer 1 further includes an airtight and waterproof layer 12, and as shown in Figs. 3 and 4, the airtight and waterproof layer 12 is located between the upper film 11 and the moisture-absorbing core 13.

In the embodiment, although the structure of the upper film 11 of the moisture-absorbing layer 1 can achieve preliminary waterproofing, there is a risk that liquid water will seep out of the moisture-absorbing layer 1 through the upper film 11 under pressure, resulting in the risk of back seepage of liquid water in the moisture-absorbing device 30. In order to further prevent the back seepage of the moisture-absorbing device 30, the moisture-absorbing device 30 of the present application has an airtight and waterproof layer 12 added between the upper film 11 and the moisture-absorbing core 13, further preventing liquid water from seeping out the moisture-absorbing layer 1 under pressure.

The airtight and waterproof layer 12 is of a structure capable of preventing water vapor and liquid water from passing through.

Specifically, the material of the airtight and waterproof layer 12 may be a plastic sheet or closed-cell foam.

In the embodiment, both the plastic sheet and the closed-cell foam have the advantages of being thin and light, waterproof, vapor-proof, strong liquid permeability resistance, good insulation and low cost, and can prevent the passage of liquid water in the moisture-absorbing core 13 under pressure, further preventing the seepage of liquid water from the moisture-absorbing layer 1. At the same time, due to the hard texture of the plastic sheet and closed-cell foam, they have impact resistance and can also play a certain role in buffering. In addition, the size and thickness of the airtight and waterproof layer 12 can also be adjusted to meet the compression and air-permeability requirements of the moisture-absorbing device 30. Certainly, the airtight and waterproof layer 12 may also be made of other airtight and waterproof materials, and is not limited thereto.

When the airtight and waterproof layer 12 is a plastic sheet or closed-cell foam, it can effectively prevent liquid water from seeping out and reduce production costs.

Specifically, the area of the substrate 14 is S1, the area of the upper film 11 is S2, the area of the airtight and waterproof layer 12 is S3, and the area of the moisture-absorbing core 13 is S4, wherein S1≥S2≥S3≥S4.

In the embodiment, the areas of the upper film 11, the airtight and waterproof layer 12, the moisture-absorbing core 13 and the substrate 14 of the moisture-absorbing layer 1 are not identical.

In the specific embodiment shown in Figs. 3 to 5, the area S2 of the upper film 11 is the same as the area S1 of the substrate 14, the area S3 of the airtight and waterproof layer 12 is the same as the area S4 of the moisture-absorbing core 13, and the area of the upper film 11 and the substrate 14 is larger than the area of the airtight and waterproof layer 12 and the moisture-absorbing core 13, that is, S1=S2 > S3=S4, so that after the hot-melt welding connection is performed at the hot-melt welding site 4 between the upper film 11 and the substrate 14, the moisture-absorbing core 13 can be enclosed in the moisture-absorbing layer 1.

In the specific embodiment shown in Fig. 8, the area S2 of the upper film 11 is smaller than the area S2 of the substrate 14, the area S3 of the airtight and waterproof layer 12 is the same as the area S4 of the moisture-absorbing core 13, and the area of the upper film 11 and the substrate 14 is larger than the area of the airtight and waterproof layer 12 and the moisture-absorbing core 13, that is, S1 > S2 > S3=S4, so that after the hot-melt welding connection is performed at the hot-melt welding site 4 between the upper film 11 and the substrate 14, the moisture-absorbing core 13 can be enclosed in the moisture-absorbing layer 1.

When S1≥S2≥S3≥S4, the upper film 11 and the substrate 14 can better enclose the moisture-absorbing core 13 in the moisture-absorbing layer 1 and protect the moisture-absorbing core 13, while the airtight protective layer 12 can further prevent the liquid water in the moisture-absorbing core 13 from seeping out.

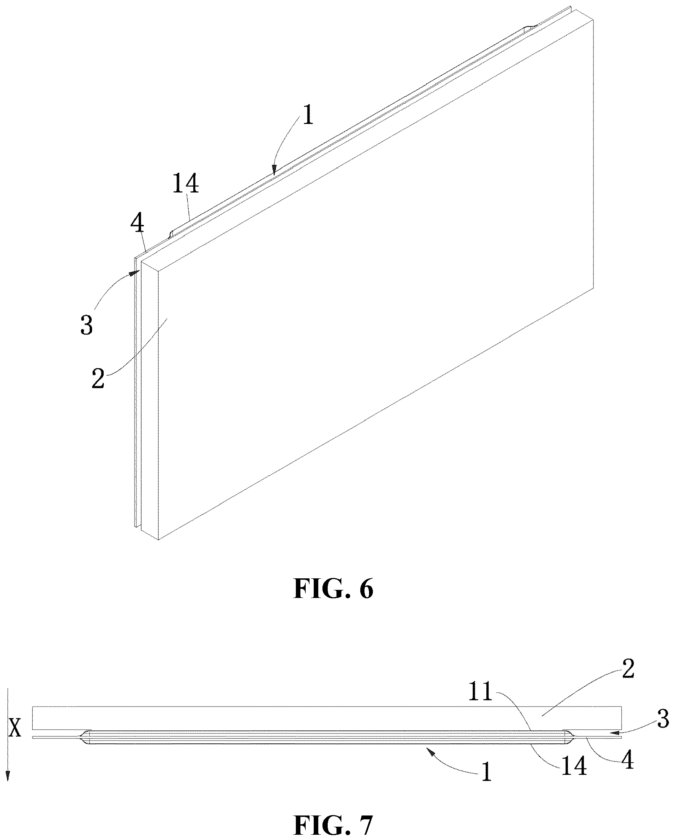

In a specific embodiment, as shown in Fig. 7, the moisture-absorbing device 30 further includes a thermal insulation buffer layer 2, and the thermal insulation buffer layer 2 is connected to the upper film 11.

In the embodiment, the thermal insulation buffer layer 2 can maintain the temperature in the battery 100, and has a buffering effect, and the thermal insulation buffer layer 2 is connected to the upper film 11 of the moisture-absorbing layer 1, so that the thermal insulation buffer layer 2 is combined with the moisture-absorbing layer 1, and the moisture-absorbing device 30 thus has the functions of thermal insulation, buffering and humidity adjustment.

By providing the thermal insulation buffer layer 2 on the side of the upper film 11 of the moisture-absorbing layer 1, the temperature difference between the inside and outside of the battery 100 can be reduced, and the water vapor in the air can be prevented from condensing into condensed water, thereby avoiding the generation of condensed water in the battery 100, avoiding the risk of insulation failure of the battery 100, and at the same time improving the anti-extrusion performance of the battery 100, and preventing the battery cell 20 and the moisture-absorbing device 30 of the battery 100 from being extruded and damaged. Moreover, the structural design of combining the thermal insulation buffer layer 2 with the moisture-absorbing layer 1 can improve the space utilization rate of the box body 10 of the battery 100 and effectively solve the problem of too many devices inside the box body 10 of the battery 100.

Specifically, the thermal insulation buffer layer 2 is made of foam.

In the embodiment, there are a number of cells in the foam and the structure between the cells is complex, so that it is easy to be compressed and deformed under an external force, and easy to recover deformation after the external force is removed. The foam has good buffering performance and good thermal insulation performance. In addition, the foam also has good electrical insulation, so that the layered structure in which the thermal insulation buffer layer 2 is connected to the moisture-absorbing layer 1 can enable the moisture-absorbing device 30 to maintain good electrical insulation performance even if it absorbs a large amount of water vapor in the battery 100, can further reduce the risk of insulation failure of the battery 100, so that the moisture-absorbing layer 1 can use a moisture-absorbing core 13 with a large moisture-absorbing capacity, thereby reducing the usage of the moisture-absorbing core 13, and further reducing the volume of the moisture-absorbing device 30.

Whether to use open-cell foam or closed-cell foam can be determined as required, but it is not limited thereto. The cells in the open-cell foam are communicated with each other, have higher air permeability, and can allow water vapor to pass through. The opening foam will not leak water after being compressed, and the internal water will not be easily lost, so that it has a good water-retention function, and can further prevent the generation of condensed water in the battery 100; the closed-cell foam has an independent cell structure, and the internal cells are separated by a diaphragm and are not communicated with to each other, so that it has good vapor and water resistance and cannot allow water vapor to pass through.

Therefore, when the thermal insulation buffer layer 2 is made of foam, it can improve the thermal insulation performance and anti-extrusion performance of the battery 100, further reduce the risk of insulation failure of the battery 100, improve the internal space utilization rate of the box body 10 of the battery 100, and save manufacturing costs.

In an embodiment, as shown in Figs. 6 and 7, the thermal insulation buffer layer 2 includes a first thermal insulation buffer layer, there is a gap 3 between the moisture-absorbing layer 1 and the first thermal insulation buffer layer along the circumferential direction of the moisture-absorbing layer 1, and water vapor can enter the moisture-absorbing layer 1 through the gap 3.

In the embodiment, in the specific implementation as shown in Fig. 7, since the upper film 11 and the substrate 14 are deformed under the high temperature of hot-melt welding connection, the moisture-absorbing device 30 in the implementation has a structure where it is protruding in the middle and thin at the hot-melt welding site 4 along the thickness direction X, and the hot-melt welding site 4 is located in the middle of the moisture-absorbing layer 1 along the thickness direction X. Therefore, when the thermal insulation buffer layer 2 and the moisture-absorbing layer 1 are connected, there is a gap 3 between the thermal insulation buffer layer 2 and the moisture-absorbing layer 1 along the circumferential direction of the moisture-absorbing layer 1 (that is, there is a gap 3 between the thermal insulation buffer layer 2 and the hot-melt welding site 4), so that water vapor can pass through the gap 3 and enter the moisture-absorbing layer 1 through the upper film 11 to be absorbed by the moisture-absorbing core 13, or is released by the moisture-absorbing core 13 through the gap 3.

Such a structure can avoid the barrier effect of the thermal insulation buffer layer 2 and the connecting elements between the thermal insulation buffer layer 2 and the moisture-absorbing layer 1 on water vapor, so that water vapor can be absorbed or released by the moisture-absorbing core 13 inside the moisture-absorbing layer 1, improving the moisture-absorbing performance of the moisture-absorbing device 30.

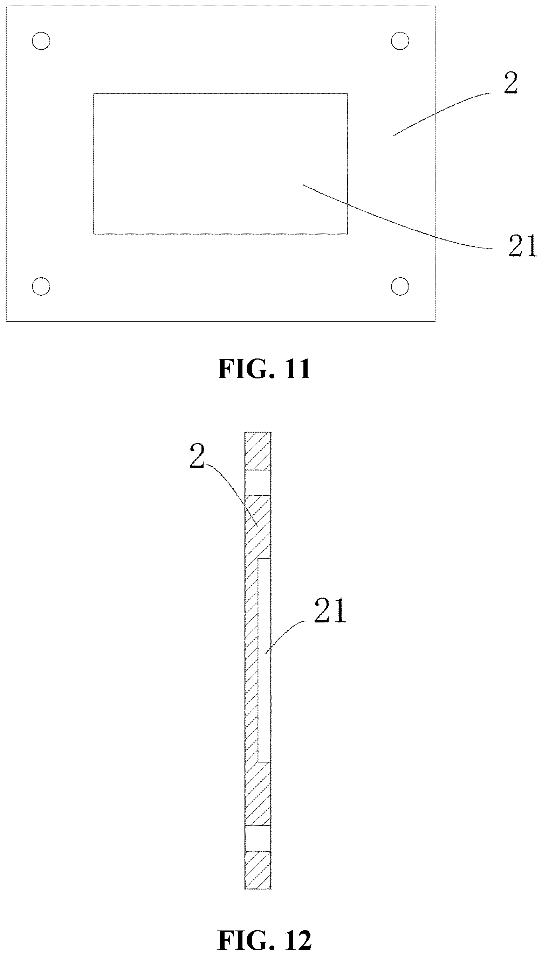

In another embodiments, as shown in Figs. 11 and 12, the thermal insulation buffer layer 2 includes a second thermal insulation buffer layer provided with a groove 21, and at least part of the moisture-absorbing layer 1 is located in the groove 21 to enable water vapor to enter the moisture-absorbing layer 1 through the thermal insulation buffer layer 2.

In the embodiment, when the upper film 11 and the substrate 14 are hot-melt welded, the upper film 11 is deformed to enclose the airtight and waterproof layer 12 and the moisture-absorbing core 13 between the upper film 11 and the substrate 14, so that the moisture-absorbing layer 1 has a structure in which the side of the substrate 14 is flat and the side of the upper film 11 protrudes. The thermal insulation buffer layer 2 is provided with a groove 21 matched with the moisture-absorbing layer 1, and can accommodate the protruding part of the moisture-absorbing layer 1 into the groove 21 when it is connected to the moisture-absorbing layer 1. In the specific embodiment shown in Figs. 11 and 12, opening foam is used as the thermal insulation buffer layer 2, so that the water vapor in the battery 100 can enter the moisture-absorbing layer 1 through the thermal insulation buffer layer 2 to be absorbed and released by the moisture-absorbing core 13, thereby further reducing the risk of insulation failure of the battery 100 due to excessive moisture.

This structure improves the moisture-absorbing performance of the moisture-absorbing device 30. Also, because the protruding part of the moisture-absorbing layer 1 can be accommodated in the groove 21, the space occupied by the moisture-absorbing layer 1 is reduced, which is conducive to the miniaturization of the moisture-absorbing device 30, and further improves the space utilization rate inside the battery 100. At the same time, the thermal insulation buffer layer 2 can protect the moisture-absorbing layer 1 and prevent the upper film 11 from being extruded and damaged.

In a specific embodiment, the substrate 14 is made of a rigid or flexible material.

In the embodiment, when the substrate 14 is made of a rigid material, it can be acrylic plate, plastic sheet, plastic block and other hard materials. At this time, the substrate 14 is wear-resistant, compression-resistant and not easy to damage; when the substrate 14 is made of a flexible material, it can be a plastic film made of various plastic materials, the cost is low, and the connection between the substrate 14 and the upper film 11 is more convenient.

In the specific embodiment shown in Fig. 7, the substrate 14 is made of a flexible material. After the upper film 11 and the substrate 14 are connected by hot-melt welding, because the upper film 11 and the substrate 14 have flexibility, the upper film 11 and the substrate 14 will deform in the middle along the thickness direction X of the moisture-absorbing layer 1 at high temperatures, which reduces the volume of the moisture-absorbing layer 1, thereby facilitating the miniaturization of the moisture-absorbing device 30 and further improving the space utilization rate in the battery 100.

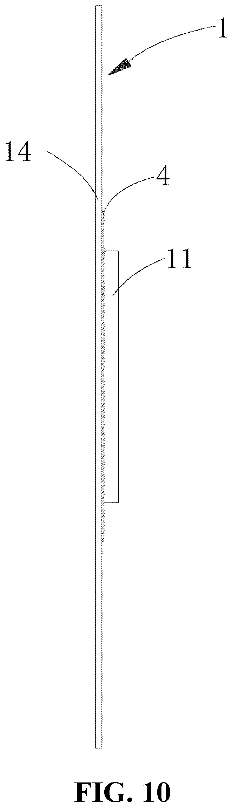

In the specific embodiment shown in Figs. 9 and 10, the substrate 14 is made of a rigid material. Because the hardness of the substrate 14 is relatively large, it is difficult to produce deformation, so that the structure of the moisture-absorbing layer 1 is firmer, less easy to damage, which increases the stability of the moisture-absorbing device 30.

When the substrate 14 is made of a flexible material, it has a smaller volume, is simple to prepare, and can be produced quickly and in large quantities on the production line; when the substrate 14 is made of a rigid material, the connection strength between the upper film 11 and the substrate 14 is higher, and it is not easy to damage, so that the installation of the moisture-absorbing layer 1 and the thermal insulation buffer layer 2 and the battery 100 is also more secure.

In an embodiment, as shown in Fig. 7, the thermal insulation buffer layer 2 and the moisture-absorbing layer 1 are bonded together.

In the embodiment, the thermal insulation buffer layer 2 has a sheet-like structure, and is connected to the upper film 11 side of the moisture-absorbing layer 1 through adhesive bonding, but the thermal insulation buffer layer 2 is not completely adhered to the moisture-absorbing layer 1, so that there is a gap 3 between the thermal insulation buffer layer 2 and the moisture-absorbing layer 1. Here, the connecting element used for bonding may be glue, double-sided tape, hot-melt glue, etc., but is not limited thereto. In addition, the connection of the thermal insulation buffer layer 2 and the moisture-absorbing layer 1 can also be in other connection forms, such as locking and snap-fit through connecting elements, but is not limited thereto.

In the specific embodiment shown in Figs. 6 and 7, the area of the thermal insulation buffer layer 2 is not greater than the area of the upper film 11, when adopting the connection mode of bonding, the upper film 11 and the thermal insulation buffer layer 2 have sufficiently large bonding area to make the thermal insulation buffer layer 2 fixed on the moisture-absorbing layer 1. Therefore, when the area of thermal insulation buffer layer 2 is not greater than the area of the upper film 11, the connection mode of bonding can make the thermal insulation buffer layer 2 and the moisture-absorbing layer 1 combine together easier. When the thermal insulation buffer layer 2 is closed-cell foam, water vapor can only be absorbed or released by the moisture-absorbing core 13 of the moisture-absorbing layer 1 through the gap 3, while when the thermal insulation buffer layer 2 is opening foam, water vapor can be absorbed or released by the moisture-absorbing core 13 through both the thermal insulation buffer layer 2 and the gap 3.

Adopting the connection mode of bonding between the thermal insulation buffer layer 2 and the moisture-absorbing layer 1 has the advantages of simple and convenient preparation process, low cost, etc., can reduce manufacturing costs, and is convenient for mass production on the production line.

In another embodiment, the substrate 14 is made of a rigid material, and the thermal insulation buffer layer 2 and the substrate 14 are connected by connecting elements.

In the embodiment, since the substrate 14 has a relatively high hardness and is not easily deformed, the structure of the moisture-absorbing layer 1 is firmer and less easy to damage, which increases the stability of the moisture-absorbing device 30.

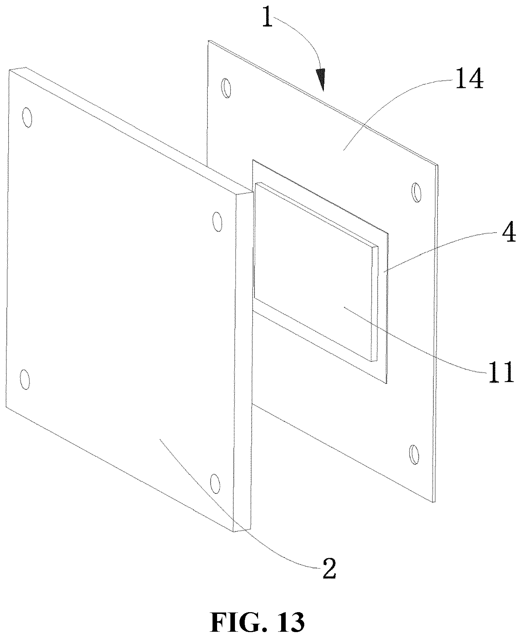

In the specific embodiment shown in Fig. 13, the area of the thermal insulation buffer layer 2 is much larger than that of the upper film 11, if the connection mode of bonding is used, the bonding area of the upper film 11 and the thermal insulation buffer layer 2 will be too small, and the connection will not be firm. Therefore, when the area of the thermal insulation buffer layer 2 is greater than that of the upper film 11, it is more suitable to connect the moisture-absorbing layer 1 and the thermal insulation buffer layer 2 together using connecting elements, so as to make the structure of the moisture-absorbing device 30 more stable. When using the connecting elements to connect, the moisture-absorbing layer 1 and the thermal insulation buffer layer 2 can be fixed together with the battery 100, which further improves the connection strength of the moisture-absorbing device 30 and the battery 100. In addition, the connection mode of connecting elements may be locking, snap-fit, etc., but is not limited thereto. Of course, the moisture-absorbing layer 1 can also be connected to the thermal insulation buffer layer 2 by adhesive bonding between the thermal insulation buffer layer 2 and the substrate 14.

Adopting the connection mode of bonding between the thermal insulation buffer layer 2 and the moisture-absorbing layer 1 can improve the connection strength between the moisture-absorbing layer 1 and the thermal insulation buffer layer 2, thereby improving the structural stability of the moisture-absorbing device 30.

The present application further provides a battery 100, wherein the battery 100 includes the moisture-absorbing device 30 in any one of the above embodiments.

The present application further provides an electrical apparatus, wherein the electrical apparatus includes the battery 100 in any one of the above embodiments, and the battery 100 is used for providing electric energy for the electrical apparatus.

The electrical apparatus may be any of the aforementioned apparatuses or systems in which the battery 100 is applied.

In an embodiment, as shown in Figs. 3 to 7, in this solution, the upper film 11 and the substrate 14 of the moisture-absorbing layer 1 are both made of flexible materials, and the area S2 of the upper film 11 is the same as the area S 1 of the lower film. After the hot-melt welding site 4 between the upper film 11 and the substrate 14 is connected by hot-melt welding by adding a hot-melt film, the moisture-absorbing core 13 can be enclosed in the moisture-absorbing layer 1, and the moisture-absorbing layer 1 has a structure where it is protruding in the middle and thin at the hot-melt welding site 4 along the thickness direction X, as shown in Fig. 7. The thermal insulation buffer layer 2 adopts a sheet-like structure, and the upper film 11 side of the moisture-absorbing layer 1 is connected to the thermal insulation buffer layer 2 through adhesive bonding. Here, as shown in Figs. 6 and 7, the thermal insulation buffer layer 2 and the moisture-absorbing layer 1 are not completely adhered together, so that there is a gap 3 between the thermal insulation buffer layer 2 and the moisture-absorbing layer 1, and water vapor can enter and exit the moisture-absorbing layer 1 without being affected by the adhesive, and thus can be absorbed or released by the moisture-absorbing core 13. Also, the overall moisture-absorbing device 30 can be installed in the battery 100 through adhesive bonding on the side of the moisture-absorbing layer 1. The moisture-absorbing device 30 of such a structure is simple to prepare, low in cost, and can be produced in large quantities quickly on the production line. Also, its structure is small in volume, easy to operate, and convenient to fix, so that it can be installed in a position where the use space is small or it is not conducive to the connection through connecting elements, such as on a cover, which improves the insulation performance of the battery 100.

In another embodiment, as shown in Figs. 8 to 13, the upper film 11 is made of a flexible material, the substrate 14 is made of a rigid material, and the area S2 of the upper film 11 is smaller than the area S1 of the substrate 14. When the upper film 11 and the substrate 14 are hot-melt welded, the upper film 11 is deformed to enclose the airtight and waterproof layer 12 and the moisture-absorbing core 13 between the upper film 11 and the substrate 14, so that the moisture-absorbing layer 1 has a structure where it is flat on the side of the substrate 14 and protrudes on the side of the upper film 11. The thermal insulation buffer layer 2 is provided with a groove 21 matched with the moisture-absorbing layer 1, and can accommodate the protruding part of the moisture-absorbing layer 1 into the groove 21 when it is connected to the moisture-absorbing layer 1, and the thermal insulation buffer 2 is connected to the substrate 14 of the moisture-absorbing layer 1 by means of connecting elements. Here, opening foam is used as the thermal insulation buffer layer 2, so that the water vapor in the battery 100 can enter and exit the moisture-absorbing layer 1 through the thermal insulation buffer layer 2 and be absorbed or released by the moisture-absorbing core 13. When using connecting elements to connect the thermal insulation buffer layer 2 and the moisture-absorbing layer 1, the overall moisture-absorbing device 30 can be fixed together with the battery 100 through the connecting elements to further improve the connection strength of the moisture-absorbing device 30 and the battery 100. In the moisture-absorbing device 30 of such a structure, the upper film 11 and the rigid substrate 14 are directly heat-melt welded, without adding a heat-melt film at the heat-melt welding site 4, which provides higher connection strength. Also, the moisture-absorbing device 30 is connected to the battery 100 through connecting elements, so that its stability is higher. In addition, the thermal insulation buffer layer 2 is opening foam, which has better compression performance and better buffering performance, so that the moisture-absorbing device 30 of this structure can be widely installed on the inner wall of the box body 10 of the battery 100 to provide thermal insulation to the sides of the battery 100.

The above are only preferred embodiment of the present application, and are not intended to limit the present application. For those skilled in the art, the present application may have various modifications and changes. Any modifications, equivalent replacements, improvements, etc. made within the spirit and principle of the present application shall be included within the scope of protection of the present application.

## Claims

1. A moisture-absorbing device, wherein the moisture-absorbing device (30) includes a moisture-absorbing layer (1), and along the thickness direction (X) of the moisture-absorbing layer (1), the moisture-absorbing layer (1) includes an upper film (11), a moisture-absorbing core (13) and a substrate (14) stacked together;
wherein, the upper film (11) is connected to the substrate (14) to enclose the moisture-absorbing core (13) therebetween.

2. The moisture-absorbing device according to claim 1, wherein the upper film (11) is a waterproof and breathable film.

3. The moisture-absorbing device according to claim 1 or 2, wherein the substrate (14) is an airtight sealing layer.

4. The moisture-absorbing device according to any one of claims 1 to 3, wherein the upper film (11) and the substrate (14) are connected by hot-melt welding.

5. The moisture-absorbing device according to any one of claims 1 to 4, wherein the upper film (11) is compounded with non-woven cloth.

6. The moisture-absorbing device according to any one of claims 1 to 5, wherein the moisture-absorbing core (13) is made of one of a fiber material, a resin material and a powder material.

7. The moisture-absorbing device according to any one of claims 1 to 6, wherein the moisture-absorbing layer (1) further includes an airtight and waterproof layer (12), and the airtight and waterproof layer (12) is located between the upper film (11) and the moisture-absorbing core (13).

8. The moisture-absorbing device according to claim 7, wherein the airtight and waterproof layer (12) is a plastic sheet or closed-cell foam.

9. The moisture-absorbing device according to claim 7, wherein the area of the substrate (14) is S1, the area of the upper film (11) is S2, the area of the airtight and waterproof layer (12) is S3, and the area of the moisture-absorbing core (13) is S4, wherein S1≥S2≥S3≥S4.

10. The moisture-absorbing device according to any one of claims 1 to 9, wherein the moisture-absorbing device (30) further includes a thermal insulation buffer layer (2), and the thermal insulation buffer layer (2) is connected to the upper film (11).

11. The moisture-absorbing device according to claim 10, wherein the thermal insulation buffer layer (2) includes a first thermal insulation buffer layer, and a gap (3) exists between the moisture-absorbing layer (1) and the first thermal insulation buffer layer along the circumferential direction of the moisture-absorbing layer (1) to enable water vapor to enter the moisture-absorbing layer (1) through the gap (3).

12. The moisture-absorbing device according to claim 10, wherein the thermal insulation buffer layer (2) includes a second thermal insulation buffer layer provided with a groove (21), and at least part of the moisture-absorbing layer (1) is located in the groove (21) to enable water vapor to enter the moisture-absorbing layer (1) through the thermal insulation buffer layer (2).

13. The moisture-absorbing device according to claim 10, wherein the substrate (14) is made of a rigid material or a flexible material.

14. The moisture-absorbing device according to claim 10, wherein the substrate (14) is made of a rigid material, and the thermal insulation buffer layer (2) is connected to the substrate (14) through a connecting element.

15. The moisture-absorbing device according to claim 10, wherein the thermal insulation buffer layer (2) is bonded to the moisture-absorbing layer (1).

16. The moisture-absorbing device according to claim 10, wherein the thermal insulation buffer layer (2) is foam.

17. A battery, wherein the battery (100) includes the moisture-absorbing device (30) according to any one of claims 1 to 16.

18. An electrical apparatus, wherein the electrical apparatus includes the battery (100) of claim 17, and the battery (100) is used for providing electric energy for the electrical apparatus.
